# EUROPEAN PATENT SPECIFICATION

(11) **EP 1 365 520 B1**
(45) Date of publication and mention of the grant of the patent: **27.07.2005**
(21) Application number: 03011544.8
(22) Date of filing: 21.05.2003
(51) Int. Cl.: H04B 7/005

(54) **Base station, and transmission power control method**
Basisstation und Verfahren zur Regelung der Übertragungsleistung
Station de base et procédé pour la commande de puissance

(30) Priority: 23.05.2002 JP 2002149611
(43) Date of publication of application: 26.11.2003
(73) Proprietor: NTT DoCoMo, Inc., Tokyo 100-6150 (JP)
(72) Inventor: Moon, Sung Uk, Chiyoda-ku, Tokyo 100-6150 (JP); Usuda, Masafumi, Chiyoda-ku, Tokyo 100-6150 (JP); Futakata, Toshiyuki, Chiyoda-ku, Tokyo 100-6150 (JP); Dohi, Tomohiro, Chiyoda-ku, Tokyo 100-6150 (JP)
(74) Representative: Grosse, Wolfgang, Dipl.-Ing.

(56) References cited:
- EP-A- 0 887 947
- WO-A-01/39540
- US-A- 5 930 242
- US-A- 6 064 659

## Description

### BACKGROUND OF THE INVENTION

### Field of the Invention

The present invention relates to a base station, and a transmission power control method.

### Related Background Art

The conventional mobile communication systems based on Code Division Multiple Access (CDMA) use, for example, DPCHs (Dedicated Physical CHannels) as uplink and downlink radio communication channels between base stations and mobile stations.

During communication with abase station through a DPCH, a mobile station calculates an estimate SIRest of signal power to interference power ratio (SIR: Signal to Interference Ratio) of the DPCH and transmits a TPC (Transmission Power Control) command in each time slot to the base station according to the rule below.
If SIRest > SIRtarget: TPC command = "0".
If SIRest < SIRtarget: TPC command = "1".

Here SIRtarget is the value of signal to interference ratio of DPCH notified of from an upper layer. In the upper layer, SIRtarget is updated in cycles of 10 ms to several seconds by use of an outer loop.

The base station receives the TPC command in an uplink from the mobile station and controls the transmission power in the following manner according to the TPC command.
If TPC command = 0: decrease the transmission power by ΔTPC (dB).
If TPC command = 1: increase the transmission power by ΔTPC (dB).

Here ΔTPC is a value set by a network and is normally 1 (dB).

Document WO 01/39540 Al discloses a base station which performs a method which determines by TPC-commands whether the output power for the next time slot exceeds a maximum permitted level. If the maximum power level is exceeded a connection is released and a call is terminated.

Document US 6,064,659 shows a method for allocating and limiting transmission power in a transceiver. In the method it is determined whether or not the total requested power exceeds the maximum transceiver power. The subscribers are separated into priority groups. Low priority subscribers are limited to the extent that the amount of power limiting needed is met.

### SUMMARY OF THE INVENTION

However, the above prior art had the problem as described below. Namely, degradation of the radio communication environment, migration of the mobile station to a remote place from the base station, or the like increases the total transmission power necessary at the base station for mobile stations within its cell in order to maintain required communication quality. This raises the concern that the total transmission power exceeds the maximum transmission power (the permitted upper limit of the total transmission power).

In that case, in order to keep the total transmission power not more than the maximum transmission power, the base station performs such control as to equally lower transmission power values of channels to the respective mobile stations located in the cell of the base station. For this reason, while the mobile stations require the power of not less than a predetermined value in order to implement communication with the required quality (e.g., BER (Bit Error Rate) = 0.001 approx.), the base station might fail to ensure the transmission power for the mobile stations. As a consequence, the communication quality degraded between the base station and the mobile stations in certain cases.

The present invention has been accomplished in view of the above problem and an object of the present invention is therefore to realize a base station, and a transmission power control method capable of reducing the degradation of communication quality between the base station and mobile stations.

In order to solve the above problem, a base station according to the present invention comprises transmission power determining means for determining whether a total transmission power in a first time slot exceeds a maximum transmission power; channel determining means for determining whether there is a channel in which a transmission power can be decreased in the first time slot, when the transmission power determining means determines that the total transmission power in the first time slot exceeds the maximum transmission power; calculating means for calculating a decrease in the transmission power in the first time slot, in the channel when the channel determining means determines that there is the channel, and for calculating an increase in the transmission power of said channel in the subsequent slots so that said decrease in the transmission power of said channel in said first time slot is compensated by an increase in the transmission power of said channel over one or more subsequent time slots.

A transmission power control method according to the present invention comprises a transmission power determining step wherein a base station determines whether a total transmission power in a first time slot exceeds a maximum transmission power; a channel determining step wherein when the transmission power determining step results in determining that the total transmission power in the first time slot exceeds the maximum transmission power, the base station determines whether there is a channel in which a transmission power can be decreased in the first time slot; a calculating step wherein when the channel determining step results in determining that there is the channel, the base station calculates a decrease in the transmission power in the first time slot in the channel, and wherein an increase in the transmission power of said channel in the subsequent time slots is calculated so that said decrease in the transmission power of said channel in said first time slot is compensated by an increase in the transmission power of said channel over one or more subsequent time slots.

According to these aspects of the invention, when the total transmission power in the first time slot exceeds the maximum transmission power and when it is determined that there is a channel in which a transmission power can be decreased in the first time slot, the transmission power to be decreased in the first time slot in the channel is calculated. Since the base station performs such control as to decrease the transmission power in the first time slot according to the calculation result, the total transmission power in the first time slot is kept below the maximum transmission power. As a consequence, it becomes feasible to decrease the degradation of communication quality between the base station and mobile stations.

In the base station according to the present invention, preferably, when the channel determining means determines that there is the channel, the calculating means calculates a transmission power to be increased in a second time slot in the channel.

In the transmission power control method according to the present invention, preferably, when the channel determining step results in determining that there is the channel, the calculating step comprises a step wherein the base station calculates a transmission power to be increased in a second time slot in the channel.

According to these aspects of the invention, when the total transmission power in the first time slot exceeds the maximum transmission power and when it is determined that there is a channel in which a transmission power can be decreased in the first time slot, the transmission power to be increased in the second time slot (a time slot except for the first time slot) in the channel is calculated. The base station performs such control as to increase the transmission power of the second time slot according to the calculation result.

These aspects of the invention have been accomplished based on the concern that it was not always possible to add the entire decrease of the transmission power in the first time slot to the second time slot. Namely, if the base station should decrease the transmission power in the first time slot without calculating the transmission power to be increased in the second time slot, the entire decrease would be appropriated to the second time slot. This can cause the total transmission power in the second time slot to exceed the maximum transmission power. Therefore, the transmission power is appropriately increased in the second time slot without exceeding the maximum transmission power, whereby the total transmission power in the second time slot can be prevented from exceeding the maximum transmission power. As a consequence, it becomes feasible to decrease the degradation of communication quality more securely between the base station and mobile stations.

It is a matter of course that the decrease of the transmission power in the first time slot can also be distributed to another time slot than the second time slot as long as it is within a time slot range used by the channel. In other words, the base station decreases the total transmission power in the time slot exceeding the maximum transmission power, by adjustment using time slots other than the time slot. This makes it feasible to more effectively utilize unused transmission power values in time slots with some room to the total transmission power.

More preferably, the base station according to the present invention further comprises channel managing means for managing types of channels using the first time slot, and the channel determining means determines whether there is a channel in which a transmission power can be decreased in the first time slot, based on the types of the channels acquired from the channel managing means.

In the transmission power control method according to the present invention, more preferably, the channel determining step is to determine whether there is a channel in which a transmission power can be decreased in the first time slot, based on types of channels acquired from channel managing means for managing types of channels using the first time slot.

According to these aspects of the invention, whether there is a channel in which a transmission power can be decreased in the first time slot is determined based on the types of the channels using the first time slot. For example, when a type of a channel indicates a channel for data communication, the channel is expected to use a plurality of time slots, and is thus determined to be the channel in which the transmission power can be decreased in the first time slot. On the other hand, when a type of a channel is a channel for audio communication, the channel is expected to use a single time slot, and is thus determined to be a channel in which the transmission power cannot be decreased in the first time slot. Namely, the base station can simply and quickly determine whether there is a channel in which a transmission power can be decreased in the first time slot, by referring to the types of the channels.

The present invention can also be applied to construction and operation of a mobile communication system comprising the aforementioned base station and a plurality of mobile stations to which a first time slot is assigned, and configured to implement communication through channels between the base station and the plurality of mobile stations.

The present invention will become more fully understood from the detailed description given herein below and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

Fig. 1 is a schematic diagram showing an example of the overall configuration of the mobile communication system.
Fig. 2 is a diagram showing the correspondence between time slots and mobile stations used in the mobile communication system.
Fig. 3 is a block diagram showing the functional configuration of the base station.
Fig. 4 is a diagram showing the transmission power values of the respective mobile stations and the total transmission power in each time slot before execution of the transmission power adjustment.
Fig. 5 is a diagram showing a data storage example in the channel type storage.
Fig. 6 is a flowchart for explaining the operation of the mobile communication system.
Fig. 7 is a diagram showing the transmission power values of the respective mobile stations and the total transmission power in each time slot after execution of the transmission power adjustment.

### DESCRIPTION OF THE PREFERRED EMBODIMENTS

Embodiments of the present invention will be described below in detail with reference to the accompanying drawings.

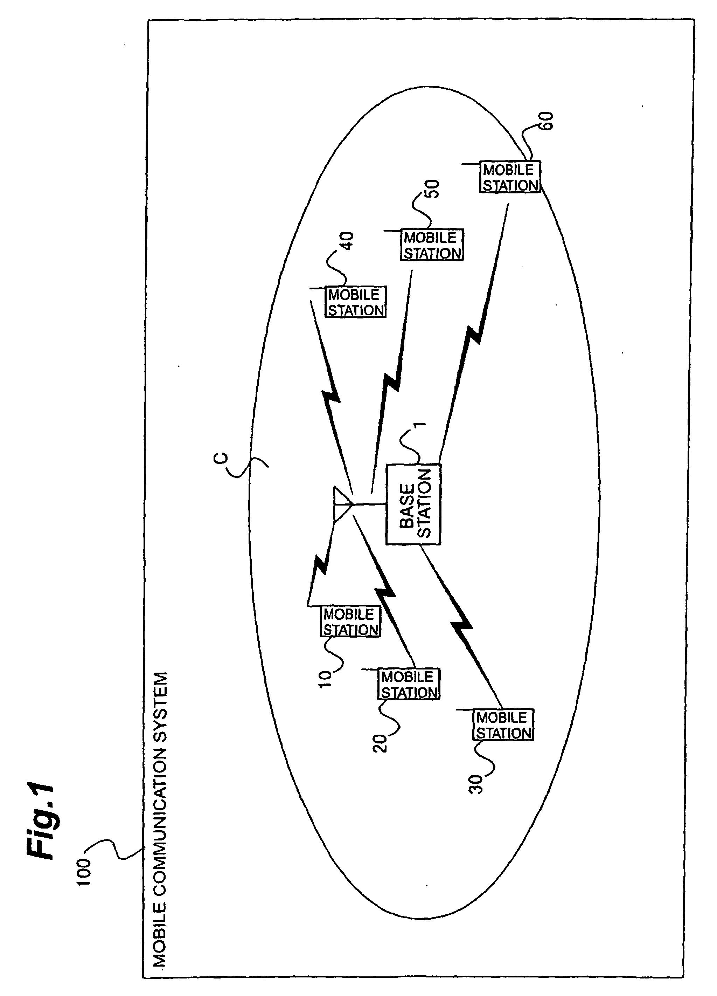

First, a configuration will be described. Fig. 1 is a schematic diagram showing the overall configuration of mobile communication system 100 in the present embodiment. As shown in Fig. 1, the mobile communication system 100 is comprised of a base station 1, and six mobile stations 10, 20, 30, 40, 50, and 60 located in a cell C of the base station 1. The base station 1 performs data transmission through channels to the mobile stations 10-60 by the CDMA-TDD (Code Division Multiple Access-Time Division Duplex) scheme.

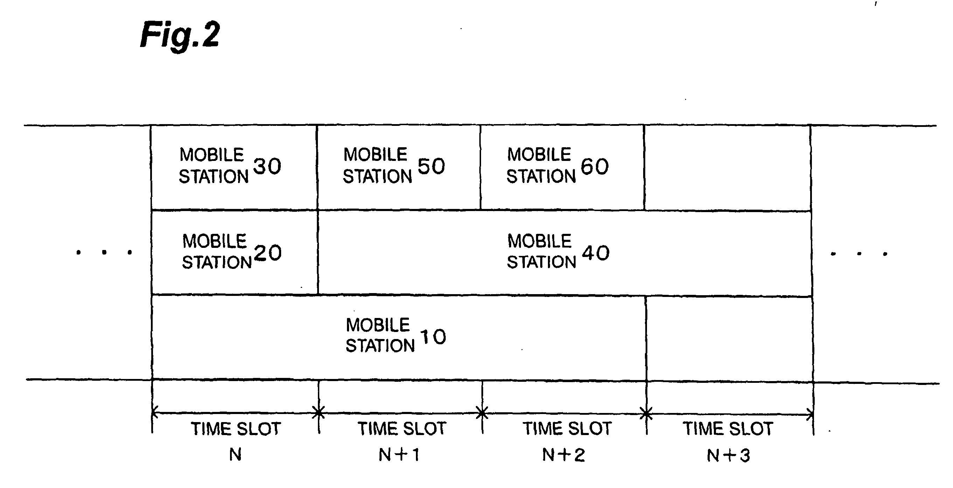

In the mobile communication system 100, as shown in Fig. 2, a plurality of time slots N, N+1, N+2, and N+3 are assigned to the mobile stations 10-60. Specifically, the time slots N to N+2 are assigned to the mobile station 10, and these time slots are used as a channel of transmission rate 384 kbps. The mobile stations 20, 30 each are assigned the time slot N used as an audio channel. Furthermore, the mobile station 40 is assigned the time slots N+1 to N+3 used as a channel of transmission rate 384 kbps. The mobile stations 50, 60 are assigned their respective time slots N+1, N+2 used as audio channels.

The base station 1 according to the present invention will be described below in detail.

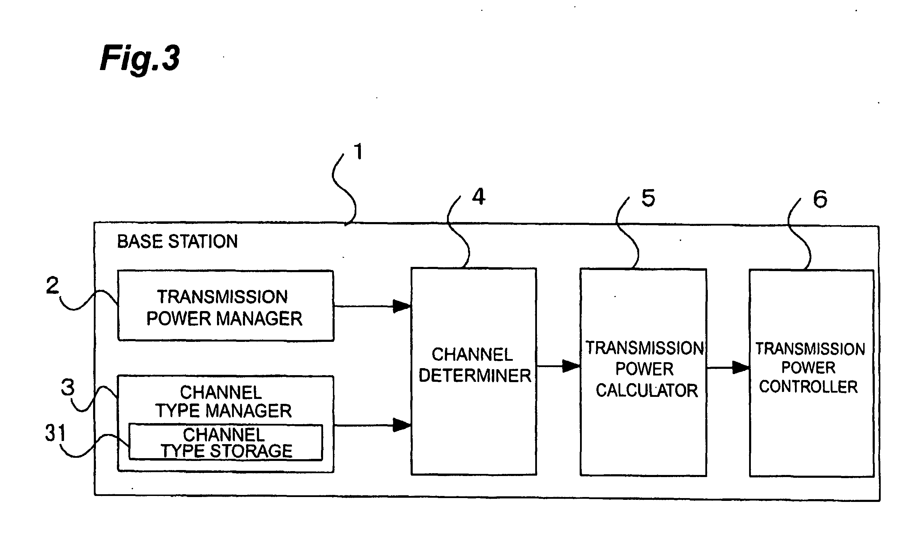

Fig. 3 is a block diagram showing the functional configuration of the base station 1. As shown in Fig. 3, the base station 1 is comprised of at least a transmission power manager 2 (corresponding to the transmission power determining means), a channel type manager 3 (corresponding to the channel managing means) having a channel type storage 31, a channel determiner 4 (corresponding to the channel determining means), a transmission power calculator 5 (corresponding to the calculating means), and a transmission power controller 6.

The transmission power manager 2 stores and manages the transmission power values of the respective mobile stations 10-60 and the total of the transmission power values of all the mobile stations 10-60 (corresponding to the total transmission power) in every time slot. The transmission power manager 2 determines whether the total transmission power in each time slot exceeds a permitted upper limit of the total transmission power (corresponding to the maximum transmission power), and outputs the determination result to the channel determiner 4. At the same time, the transmission power manager 2 notifies the channel determiner 4 of IDs of mobile stations in a time slot in which the total transmission power exceeds the maximum transmission power.

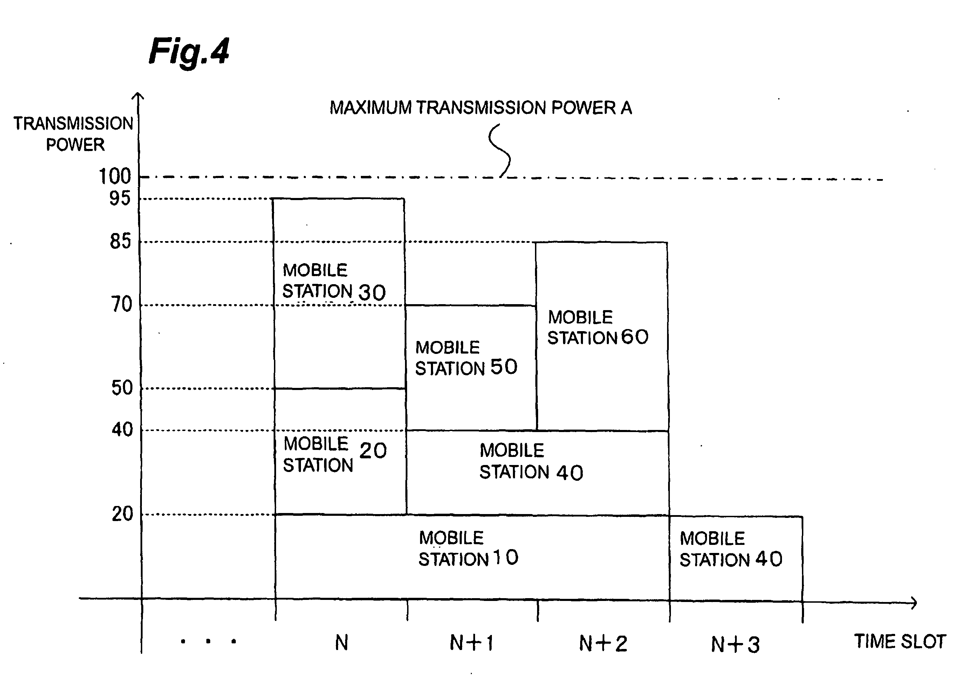

The transmission power managing method by the transmission power manager 2 will be described below in more detail with reference to Fig. 4. Fig. 4 is a conceptual diagram showing an example of the transmission power values of the respective mobile stations and the total transmission power in each of the time slots N to N+3. As shown in Fig. 4, supposing the maximum transmission power that the base station 1 can supply into channels, is 100 (indicated by chain line A in Fig. 4), the transmission power supplied into the channel of the mobile station 10 in the time slot N is 20. Likewise, the transmission power values supplied into the channels of the mobile stations 20 and 30 are 30 and 45, respectively. Accordingly, the total transmission power in the time slot N is 20 + 30 + 45 = 95.

As for the time slot N+1, the transmission power values supplied into the channels of the mobile stations 10, 40 and 50 are 20, 20, and 30, respectively, and the total transmission power is 70. Similarly, as to the time slot N+2, the transmission power values supplied into the channels of the mobile stations 10, 40 and 60 are 20, 20, and 45, respectively, and the total transmission power is 85. Furthermore, concerning the time slot N+3, the transmission power supplied into the channel of the mobile station 40 is 20 and the total transmission power is 20.

The channel type manager 3 has the channel type storage 31 and manages attributes of signals transmitted through channels used by the respective mobile stations 10-60 (the attributes will be referred to hereinafter as "channel types"), with reference to the data in the channel type storage 31. The channel type manager 3 notifies the channel determiner 4 of the channel types of the respective mobile stations 10-60.

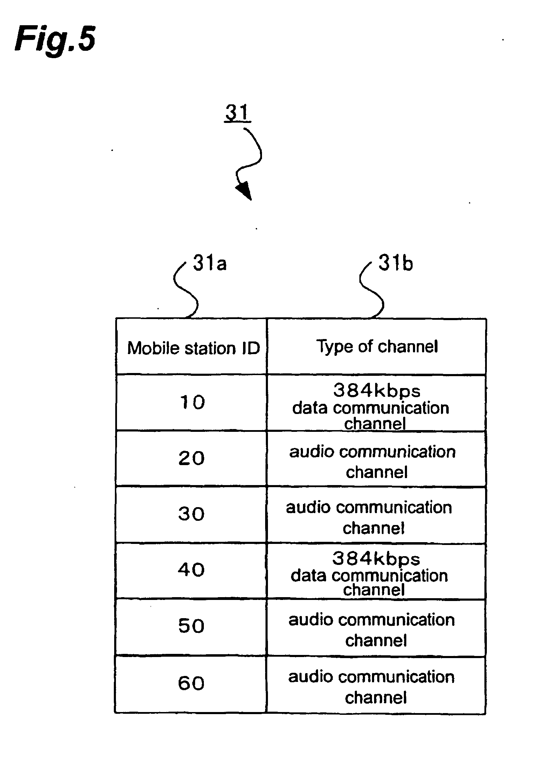

Fig. 5 is a diagram showing a data storage example inside the channel type storage 31. As shown in Fig. 5, the channel type storage 31 has a mobile station area 31a and a channel type area 31b. In the mobile station area 31a, data enabling identification of each mobile station 10-60 (e.g., 10, 20, 30, 40, 50, 60) is stored as mobile station ID. In the channel type area 31b, a type of a channel used by each mobile station 10-60 (e.g., 384kbps data communication channel or audio communication channel) is stored so as to be able to be updated.

The channel determiner 4 determines whether there is a channel in which a transmission power can be adjusted in a time slot, according to the determination result supplied from the transmission power manager 2. Specifically, when the total transmission power in the time slot exceeds the maximum transmission power, the channel determiner 4 determines whether there is a channel in which a transmission power can be adjusted in the time slot, based on the channel types notified of by the channel type manager 3.

Here the adjustment of transmission power is such control that the total transmission power is decreased in the time slot in which the total transmission power exceeds the maximum transmission power (corresponding to the first time slot) and the decrease is appropriated (or transferred) to another time slot (corresponding to the second time slot) whereby the total transmission power is kept below the maximum transmission power in the both time slots.

When the channel determiner 4 determines that there is a channel in which a transmission power can be adjusted in the time slot, the transmission power calculator 5 calculates a transmission power to be decreased in the time slot in the channel. In the above case, the transmission power calculator 5 also calculates a transmission power to be increased in another time slot in the channel. In these calculations, preferably, values of transmission power values are calculated so as to prevent the total transmission power in the time slot with the decrease of the transmission power, as a matter of course, and the total transmission power in the time slot with the increase of the transmission power from exceeding the maximum transmission power.

The transmission power controller 6 controls the transmission power values actually supplied into the channels used by the respective mobile stations 10-60, in each time slot on the basis of the calculation result by the transmission power calculator 5.

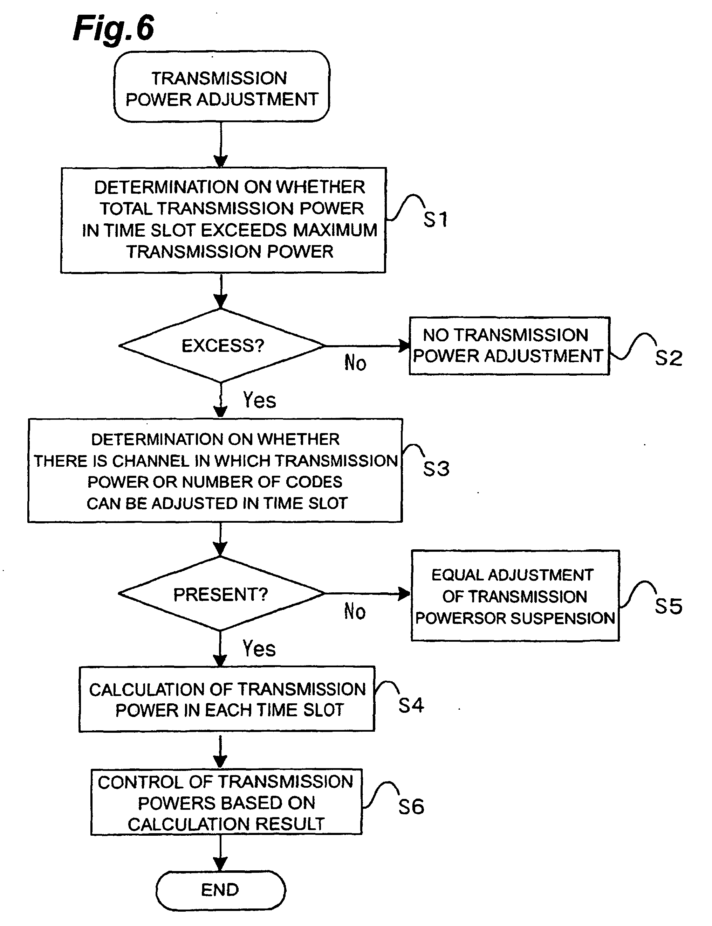

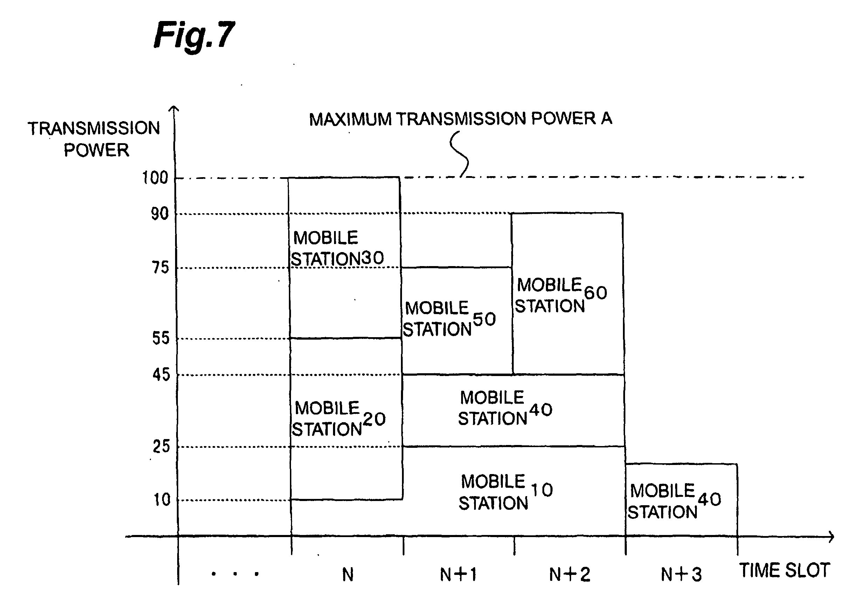

The operation will be described below with reference to Figs. 6 and 7. In addition, each of steps constituting the transmission power control method according to the present invention will also be described. The operation will be described on the premise that the total transmission power in the time slot N shown in Figs. 2 and 4 is assumed to exceed the maximum transmission power in the present embodiment, but it is noted that the present invention is also applicable to cases where the total transmission power in another time slot N+1,..., N+3 exceeds the maximum transmission power.

Fig. 6 is a flowchart for explaining the transmission power adjustment executed by the base station 1. First, the base station 1 makes the transmission power manager 2 determine whether the total transmission power in the time slot N exceeds the maximum transmission power (S1). At the present time, the total transmission power in the time slot N is 95, as shown in Fig. 4, and is thus below the maximum transmission power of 100. Accordingly, the base station 1 maintains the current transmission power values without adjustment of transmission power values and performs data transmission to the mobile stations 10-60 (S2).

Now let us suppose, for example, that the mobile station 20 has moved away from the base station 1 and this migration increased the transmission power used by the mobile station 20 in the time slot N from present 20 to 45. In this case, the total transmission power in the time slot N is 20 + 45 + 45 = 110, so as to exceed the maximum transmission power of 100. Accordingly, the flow transfers to S3 in Fig. 6.

In S3, the base station 1 makes the channel determiner 4 determine whether there is a channel in which the transmission power or the number of codes (spreading codes) can be adjusted in the time slot N, based on the channel types of the mobile stations 10, 20, 30 notified of by the channel type manager 3. The determination process can be executed, not only on the basis of the channel types, but also on the basis of various channel characteristics. For example, the determination can also be made based on whether a channel uses a plurality of time slots.

In this respect, since a channel with the channel type of 384kbps data communication normally uses a plurality of time slots, it is determined to be a channel in which the transmission power or the number of codes can be adjusted in the time slot N. In contrast to it, since a channel with the channel type of audio communication normally uses a single time slot, it is determined to be a channel in which the transmission power or the number of codes cannot be adjusted in the time slot N. Accordingly, the present embodiment is an example adopting the simple channel types as indictors of judgment on whether the transmission power can be adjusted.

The determination process in S3 results in determining that there is a 384kbps data communication channel (i.e., a channel in which the transmission power or the number of codes can be adjusted in the time slot N) among the types of the channels used by the mobile stations 10, 20, 30 assigned the time slot N. Therefore, the base station 1 makes the transmission power calculator 5 calculate the transmission power to be decreased in the time slot N in the channel (the channel for the mobile station 10) . At the same time, the base station 1 makes the transmission power calculator 5 calculate the transmission power to be increased in (or added to) the time slots N+1, N+2 in the channel (S4).

Let us explain here the reason why the transmission power is adjusted, particularly, about the channel of the mobile station 10. Since the mobile station 10 uses a plurality of time slots N to N+2, different from the mobile stations 20, 30, it is allowed to satisfy the required communication quality in the gross of these time slots. Therefore, the transmission power can be decreased in the time slot N, while the transmission power is increased in the time slots N+1, N+2, whereby the required communication quality can be ensured as a whole. However, if the required communication quality can be ensured between the base station 1 and the mobile station 10, the transmission power does not always have to be increased in the time slots N+1, N+2.

The method of adjusting the transmission power will be detailed below with reference to Fig. 7.

As shown in Fig. 7, concerning the channel of the mobile station 10 which was determined in S3 that the transmission power or the number of codes could be adjusted in the time slot, the transmission power is decreased from 20 to 10 in the time slot N. As a result, the total transmission power in the time slot N is decreased from 110 to 100. On the other hand, the transmission power of the channel is increased from 20 to 25 in the time slot N+1. As a result, the total transmission power in the time slot N+1 is increased from 70 to 75. Likewise, the transmission power of the channel is increased from 20 to 25 in the time slot N+2 . As a result, the total transmission power in the time slot N+2 is increased from 85 to 90.

Namely, the base station 1 distributes halves of the decrease of 10 in the total transmission power in the time slot N to the time slots N+1 and N+2, thereby adjusting the total transmission power in each time slot. This prevents the total transmission power from exceeding the maximum transmission power 100 in every time slot N to N+2 involved in the adjustment and keeps the total of the transmission power values supplied into the channel of the mobile station 10 from changing before and after the execution of the calculation process in S4. Accordingly, the base station 1 can secure the transmission power values enough to satisfy the required communication quality, for the mobile stations 10-60. As a result, it becomes feasible to decrease the degradation of communication quality between the base station 1 and the mobile stations 10-60.

The calculation process in S4 was to distribute the excess transmission power in the time slot N to the time slots N+1, N+2, but the adjustment can be conducted by any method as long as there is no time slot over the maximum transmission power of 100 as a result of the adjustment of transmission power. Accordingly, for example, it is also possible to appropriate the decrease of 10 in the transmission power of the mobile station 10 in the time slot N to only the time slot N+1.

On the other hand, when the determination in S3 results in determining that there is no channel in which the transmission power or the number of codes can be adjusted in the time slot, the base station 1 executes the process of equally adjusting the transmission power values as before, or suspends the transmission power adjustment. The equal adjustment of transmission power values is a process of decreasing the transmission power values of the respective mobile stations 10, 20, 30 equally each by four, in order to decrease the excess of 10 in the total transmission power in the time slot N, as described previously. As a result, the total transmission power is calculated as 16 + 41 + 41 = 98, so as to fall below the maximum transmission power of 100. However, for example, the mobile station 30 requires at least the transmission power of 45, but the transmission power is decreased to 41; therefore, the communication quality degrades inevitably.

In S6, the base station 1 makes the transmission power controller 6 control the transmission power values actually supplied into the channels used by the respective mobile stations 10-60, in each time slot on the basis of the calculation result by the transmission power calculator 5. In the present embodiment, after completion of the sequential transmission power adjustment, the transmission power of the mobile station 20 in the time slot N is changed from 30 to 45, as shown in Fig. 7. In conjunction therewith, the transmission power values of the mobile station 10 in the time slots N, N+1, and N+2 are changed from 20, 20, and 20 to 10, 25, and 25, respectively. There is no change effected in the transmission power values of the other mobile stations.

As described above, when the total transmission power in the time slot N exceeds the maximum transmission power and when it is determined that there is a channel in which the transmission power can be adjusted, the base station 1 according to the present invention calculates the transmission power values to be adjusted in the time slots N to N+2 in the channel. The base station 1 performs the control to adjust the transmission power values across the different time slots according to the calculation result. Namely, the base station 1 decreases the transmission power in the time slot N and increases the transmission power values in the time slots N+1, N+2, whereby the total transmission power in the time slot N is kept below the maximum transmission power. As a consequence, it becomes feasible to decrease the degradation of communication quality between the base station 1 and the mobile station 10. The decrease in the degradation of communication quality contributes to decrease in the retransmission rate due to transmission error, so as to increase the volume of data transmitted per unit time (throughput) in the entire mobile communication system 100.

The forms described in the above embodiment are just a preferred example of the mobile communication system according to the present invention, and it is noted that the present invention is by no means intended to be limited to this example. For example, the present embodiment described the example in which the base station 1 performed the control of transmission power, but the system may also be configured so that a radio control apparatus for totally controlling a plurality of base stations including the base station 1, or the mobile stations can perform the transmission power control according to the present invention. Furthermore, the mobile stations 10-60 are not only cellular phones, but also information devices with the radio communication function, for example, like PDA (Personal Digital Assistance).

Described last are a program for implementing the transmission power control technology according to the present invention, and a computer-readable recording medium (hereinafter referred to simply as a "recording medium") in which the program is recorded. The recording medium is a medium that can induce change states of energy such as magnetism, light, electricity, or the like according to the description contents of the program against a reading device installed as one of hardware resources in general-purpose computers or the like and that can transmit the description contents of the program to the reading device in the format of signals corresponding to the change states. Such recording media include, for example, those detachably mounted on the computers (including portable terminals) like IC cards of UIM and the like, magnetic disks, optical disks, and magnetooptical disks; nonvolatile semiconductor memories such as HDs (Hard Disks) fixedly incorporated in the computers, and firmware integrally fixed; and so on.

The above program can be configured so that part or the whole thereof is transmitted from another device through a transmission media such as a communication line to be received and recorded by the base station according to the present invention. Conversely, the above program may also be configured so that it is transmitted from the base station according to the present invention through the transmission medium to another device to be installed there.

## Claims

1. A base station (1) comprising:
transmission power determining means (2) for determining whether a total transmission power in a first time slot (N) exceeds a maximum transmission power;
channel determining means (4) for determining whether there is a channel in which a transmission power can be decreased in the first time slot(N), when the transmission power determining means (2) determines that the total transmission power in the first time slot (N) exceeds the maximum transmission power; and
calculating means (5) for calculating a decrease in the transmission power of said channel in said first time slot (N) in order to decrease the total transmission power in the first time slot when the channel determining means (4) determines that there is said channel, **characterized in that**
said calculating means (5) calculates an increase in the transmission power of said channel in subsequent time slots (N+1, N+2, ...) so that said decrease in the transmission power of said channel in said first time slot is compensated by an increase in the transmission power of said channel over one or more subsequent time slots.

2. The base station (1) according to Claim I, further comprising channel managing means (3) for managing types of channels using the first time slot (N),
wherein the channel determining means (4) determines whether there is a channel in which a transmission power can be decreased in the first time slot (N), based on the types of the channels acquired from the channel managing means (3).

3. A transmission power control method comprising:
a transmission power determining step (S1) wherein a base station determines whether a total transmission power in a first time slot exceeds a maximum transmission power;
a channel determining step (S3) wherein when the transmission power determining step results in determining that the total transmission power in the first time slot exceeds the maximum transmission power, the base station determines whether there is a channel in which a transmission power can be decreased in the first time slot; and
a calculating step (S4) wherein when the channel determining step results in determining that there is said channel, the base station calculates a decrease in the transmission power of said channel in said first time slot in order to decrease the total transmission power in the first time slot, **characterized in that**
in said calculating step (S4) an increase in the transmission power of said channel in subsequent time slots (N+1, N+2, ...) is calculated so that said decrease in the transmission power of said channel in said first time slot is compensated by an increase in the transmission power of said channel over one or more subsequent time slots.

## Patentansprüche

1. Basisstation (1) aufweisend:
eine Sendeleistungs-Bestimmungseinrichtung (2), welche bestimmt, ob eine Gesamtsendeleistung in einem ersten Zeitschlitz (N) eine maximale Sendeleistung überschreitet;
eine Kanalbestimmungseinrichtung (4), welche bestimmt, ob es einen Kanal gibt, bei welchem die Sendeleistung im ersten Zeitschlitz (N) verringert werden kann, wenn die Sendeleistungs-Bestimmungseinrichtung (2) bestimmt, dass die Gesamtsendeleistung im ersten Zeitschlitz (N) die maximale Sendeleistung überschreitet; und
eine Berechnungseinrichtung (5), welche eine Verringerung der Sendeleistung des Kanals im ersten Zeitschlitz (N) berechnet, um die Gesamtsendeleistung im ersten Zeitschlitz zu verringern, wenn die Kanalbestimmungseinrichtung (4) bestimmt, dass es einen solchen Kanal gibt, **dadurch gekennzeichnet, dass**
die Berechnungseinrichtung (5) eine Vergrößerung der Sendeleistung des Kanals in den nachfolgenden Zeitschlitzen (N+1, N+2, ...) berechnet, so dass die Verringerung der Sendeleistung des Kanals im ersten Zeitschlitz durch eine Vergrößerung der Sendeleistung dieses Kanals über einen oder mehrere nachfolgende Zeitschlitze kompensiert wird.

2. Basisstation (1) nach Anspruch 1, welche weiter eine Kanalverwaltungseinrichtung (3) aufweist, welche Typen von Kanälen unter Verwendung des ersten Zeitschlitzes (N) verwaltet,
wobei die Kanalbestimmungseinrichtung (4) bestimmt, ob es einen Kanal gibt, bei welchem die Sendeleistung im ersten Zeitschlitz (N) verringert werden kann, basierend auf den Typen der von der Kanalverwaltungseinrichtung (3) übernommenen Kanäle.

3. Sendeleistungs-Steuerverfahren beinhaltend:
einen Sendeleistungs-Bestimmungsschritt (S1), bei welchem eine Basisstation bestimmt, ob eine Gesamtsendeleistung in einem ersten Zeitschlitz eine maximale Sendeleistung überschreitet;
einen Kanalbestimmungsschritt (S2), bei dem, wenn aus dem Sendeleistungs-Bestimmungsschritt resultiert, dass bestimmt wird, dass die Gesamtsendeleistung im ersten Zeitschlitz die maximale Sendeleistung überschreitet, die Basisstation bestimmt, ob es einen Kanal gibt, bei welchem eine Sendeleistung im ersten Zeitschlitz verringert werden kann; und
einen Berechnungsschritt (S4), bei dem, wenn aus dem Kanalbestimmungsschritt resultiert, dass bestimmt wird, dass es einen solchen Kanal gibt, die Basisstation eine Verringerung der Sendeleistung des Kanals im ersten Zeitschlitz berechnet, um die Gesamtsendeleistung im ersten Zeitschlitz zu verringern, **dadurch gekennzeichnet, dass**
bei dem Berechnungsschritt (S4) eine Vergrößerung der Sendeleistung des Kanals in den nachfolgenden Zeitschlitzen (N+1, N+2, ...) berechnet wird, so dass die Verringerung der Sendeleistung des Kanals im ersten Zeitschlitz durch eine Vergrößerung der Sendeleistung dieses Kanals über einen oder mehrere nachfolgende Zeitschlitze kompensiert wird.

## Revendications

1. Station de base (1) comprenant :
un moyen de détermination de puissance de transmission (2) pour déterminer si une puissance de transmission totale dans une première tranche de temps (N) dépasse une puissance de transmission maximum ;
un moyen de détermination de canal (4) pour déterminer s'il y a un canal dans lequel une puissance de transmission peut être diminuée dans la première tranche de temps (N), lorsque le moyen de détermination de puissance de transmission (2) détermine que la puissance de transmission totale dans la première tranche de temps (N) dépasse la puissance de transmission maximum ; et
un moyen de calcul (5) pour calculer une diminution de la puissance de transmission dudit canal dans ladite première tranche de temps (N) afin de diminuer la puissance de transmission totale dans la première tranche de temps lorsque le moyen de détermination de canal (4) détermine qu'il y a ledit canal, **caractérisée en ce que**
ledit moyen de calcul (5) calcule une augmentation de la puissance de transmission dudit canal dans les tranches de temps subséquentes (N+1, N+2, ...) de sorte que ladite diminution de la puissance de transmission dudit canal dans ladite première tranche de temps soit compensée par une augmentation de la puissance de transmission dudit canal sur une ou plusieurs tranches de temps subséquentes.

2. Station de base (1) selon la revendication 1, comprenant en outre un moyen de gestion de canal (3) pour gérer des types de canaux utilisant la première tranche de temps (N),
dans laquelle le moyen de détermination de canal (4) détermine s'il y a un canal dans lequel une puissance de transmission peut être diminuée dans la première tranche de temps (N), sur la base des types des canaux acquis depuis le moyen de gestion de canal (3).

3. Procédé de commande de la puissance de transmission comprenant :
une étape de détermination de puissance de transmission (S1) dans laquelle une station de base détermine si une puissance de transmission totale dans une première tranche de temps dépasse une puissance de transmission maximum ;
une étape de détermination de canal (S3) dans laquelle lorsque l'étape de détermination de puissance de transmission conduit à la détermination que la puissance de transmission totale dans la première tranche de temps dépasse la puissance de transmission maximum, la station de base détermine s'il y a un canal dans lequel une puissance de transmission peut être diminuée dans la première tranche de temps ; et
une étape de calcul (S4) dans laquelle lorsque l'étape de détermination de canal conduit à la détermination qu'il y a ledit canal, la station de base calcule une diminution de la puissance de transmission dudit canal dans ladite première tranche de temps afin de diminuer la puissance de transmission totale dans la première tranche de temps, **caractérisé en ce que**
dans ladite étape de calcul (S4) une augmentation de la puissance de transmission dudit canal dans les tranches de temps subséquentes (N+1, N+2, ...) est calculée de sorte que ladite diminution de la puissance de transmission dudit canal dans ladite première tranche de temps soit compensée par une augmentation de la puissance de transmission dudit canal sur une ou plusieurs tranches de temps subséquentes.
